# EUROPEAN PATENT APPLICATION

(11) **EP 0 836 181 A2**
(43) Date of publication of application: **15.04.1998**
(21) Application number: 97308052.6
(22) Date of filing: 10.10.1997
(51) Int. Cl.: G11B 7/24, G11B 7/26

(54) **Methods for bonding double-sided discs**

(30) Priority: 11.10.1996 US 28357 P; 06.10.1997 US 944152
(71) Applicant: Wea Manufacturing Inc., Olyphant, Pennsylvania 18448 (US)
(72) Inventor: Mueller William R., Clarks Summit, Pennsylvania 18411, (US); Pickutoski, Edward, Olyphant, Pennsylvania 18447, (US); Gensel,Lewis R., Avoca, Pennsylvania 18641, (US)
(74) Representative: Barnfather, Karl Jon, Dr.

(57) **Abstract**

Two-program-information-sides DVDs are fabricated using light-curable bonding materials. First and second plastic discs are provided, each containing program information and a light-reflecting coating with a thickness which allows light-curable bonding material curing through the light-reflecting coating while maintaining sufficient light-reflecting coating reflectivity for playability. A two-program-information-sides DVD is fabricated by bonding the first and second discs back to back using a light-curable bonding material which is cured by shinning light through one or both discs. One-program-information-side DVDs with frontside program information discs and backside visible image information discs which require light-reflecting coatings may be similarly fabricated using light-curable bonding materials in accordance with the invention.

## Description

### Background of the Invention

This invention relates to information recording media in the form of light-readable discs, and more particularly to such media which are made up of two such discs secured to one another back to back to form a two-sided stack.

Light-readable information recording media in the form of discs are well known as shown, for example, by Kramer U.S. patent 5,068,846. Commercially available compact discs ("CDs") and compact disc read-only memories ("CD-ROMs") are examples of recording media of this general type.

More recently, digital versatile discs ("DVDs") have emerged wherein light-readable information technology is employed to record movies and other similar real-time audio/visual programming (hereinafter "program information") on discs. To increase program information storage capacity, DVDs are formed from two discs (similar in appearance to conventional audio CDs) bonded back to back (see, for example, U.S. patent application No. 08/579,302, filed December 27, 1995, the entire contents of which are hereby incorporated by reference).

Relatively long audio/visual programs will not fit on one disc of conventional audio CD size. As such, the "backside" (i.e., the second disc bonded to the back of the "frontside" or first disc) of a DVD may often contain "spillover" audio/visual program information (i.e., information which would not fit on the frontside of the DVD). When audio/visual program information spills over to the backside of a DVD, the processing steps for fabricating the DVD are complicated as described below.

During the formation of a one-program-information-side DVD (i.e., a DVD wherein only the frontside disc in the two disc stack contains program information), a substantially transparent plastic disc (i.e., transparent enough to allow a light beam to remain detectable following round trip travel through the plastic disc) with a substantially planar first surface (i.e., planar enough to allow a light source to differentiate topographical features disposed on a surface of the plastic disc as the disc rotates) is provided. Opposite the first surface is a second surface having program information recorded on it by means of local changes in the distance of the second surface from the first surface. A light-reflecting coating (e.g., aluminum) is then deposited (e.g., sputtered) over the second surface, the light-reflecting coating conforming to the local changes of the second surface so that light is reflected back through the disc in accordance with the program information recorded by means of the local changes.

Because of its relatively low cost and the ease with which it may be deposited, aluminum is commonly used as the light-reflecting coating in CDs, CD-ROMs, and DVDs. When aluminum is so used, the aluminum light-reflecting coating is generally deposited with a thickness of approximately 60 nanometers to ensure that the coating has sufficient reflectivity for playability (i.e., at least the minimum reflectivity required so that light reflected off the light-reflecting coating has sufficient magnitude to enable a disc player to detect and process the program information contained within the reflected light).

Once the frontside program-information bearing disc has been fabricated, one-program-information-side DVD formation is completed by bonding a backside non-program-information bearing disc (e.g., a disc without program information such as a blank disc or a disc with artwork, labels, or other ornamentation) to the frontside disc. This type of non-program-information bearing disc does not normally contain a light-reflecting coating so that bonding may be performed using a light-curable bonding material which is cured by transmitting light through the backside plastic disc. Light can not be transmitted through the frontside disc because it contains a light-reflecting coating.

When a two-program-information-sides DVD (i.e., a DVD wherein both discs contain program information) is formed, a light-reflecting coating must be deposited on the backside plastic disc so that program information recorded thereon may be read out. A light-reflecting coating may also be required if "pit art" (see previously incorporated U.S. patent application No. 08/579,302, filed December 27, 1995), "enhanced pit art" (see, for example, U.S. patent application No. 08/714,302, filed September 18, 1996, which is hereby incorporated by reference herein), or similar visible image information is contained on the backside disc. (As used herein, the term "information," unmodified, refers to both program information and visual image information such as pit art, enhanced pit art, holographic artwork, and other labels/ornamentation.) Such a backside light-reflecting coating will block the transmission of light through the backside disc, making the use of light-curable bonding materials impractical for two-program-information-sides DVD fabrication and for the fabrication of any DVD wherein the backside disc has a light-reflecting coating. More ineffective and costly bonding techniques (e.g., thermally activated bonding) must be employed to form such DVDs.

A need therefore exists for a method of fabricating a two-program-information-sides DVD using light-curable bonding materials. Such a method will reduce the manufacturing cost of two-program-information-sides DVDs and any DVD with a backside disc light-reflecting coating.

In view of the foregoing, it is an object of this invention to provide methods for curing light-curable bonding materials during the fabrication of two-program-information-sides DVDs and other DVDs with backside discs containing light-reflecting coatings.

### Summary of the Invention

These and other objects of the invention are accomplished in accordance with the principles of the invention by providing a light-reflecting coating for use in DVDs which possesses sufficient reflectivity for playability and sufficient transmissivity to allow curing of a light-curable bonding material by transmitting light through the light-reflecting coating.

During DVD formation, a first disc in the DVD is constructed generally as shown in Kramer U.S. patent 5,068,846. This first disc therefore has light-readable program information recorded on it in the known fashion (e.g., local changes in distance between a first and a second surface of the disc covered with a light-reflecting coating so that light is reflected back through the disc in accordance with the program information recorded by means of the local changes). The second disc in the DVD may similarly contain program information or some other information which requires a light-reflecting coating (e.g., pit art, enhanced pit art, or holographic artwork). In either case, both the first and the second disc in the DVD have light-reflecting coatings.

Unlike conventional light-reflecting coatings, the thickness of the light-reflecting coating of each disc is selected to have both sufficient reflectivity for playability and sufficient transmissivity to allow curing of a light-curable bonding material by transmitting light through the light-reflecting coating. For example, if aluminum is used for each disc's light-reflecting coating, each aluminum coating is selected to be approximately 20 to 40 nanometers in thickness. Within this thickness range an aluminum coating has a reflectivity greater than 60% (for the wavelengths commonly emitted by disc player lasers). Furthermore, if an ultra-violet-light-curable bonding material is employed to secure the first disc to the second disc, an aluminum coating with a thickness between 20 and 40 nanometers will exhibit sufficient penetrated ultra-violet energy to ensure adequate curing (i.e., an aluminum light-reflecting coating within this thickness range possesses sufficient transmissivity to allow an ultra-violet-light-curable bonding material to be cured by transmitting ultra-violet light through the light-reflecting coating). Other materials (e.g., gold, silver, or silicon nitride) may be similarly employed as light-reflecting coating materials by selecting material thicknesses which provide sufficient reflectivity for playability and sufficient transmissivity for curing.

Following the formation of the first and second discs, the light-reflecting coating side of one or both discs is coated with light-curable bonding material and the discs are stacked back to back to form a DVD. The light-curable bonding material is then cured by shining light through either one or both of the discs. In this manner, a DVD may be formed using a light-curable bonding material even when the frontside disc and the bacKside disc contain light-reflecting coatings.

Further features of the invention, its nature and various advantages will be more apparent from the accompanying drawings and the following detailed description of the preferred embodiments.

### Brief Description of the Drawings

FIG. 1 shows a cross-sectional view of a conventional one-program-information-side DVD.

FIG. 2 shows a cross-sectional view of a conventional two-program-information-sides DVD.

FIG. 3 shows a cross-sectional view of a two-program-information-sides DVD made in accordance with this invention.

FIG. 4 shows a graph of aluminum thickness vs. % reflectivity and penetrated ultra-violet energy.

### Detailed Description of the Preferred Embodiments

In order to understand how the present invention improves two-program-information-sides DVD formation, it is first necessary to understand how conventional one-program-information-side DVDs are formed. With this understanding, the problems which prevent conventional one-program-information-side DVD fabrication techniques from being employed during two-program-information-sides DVD formation will be apparent.

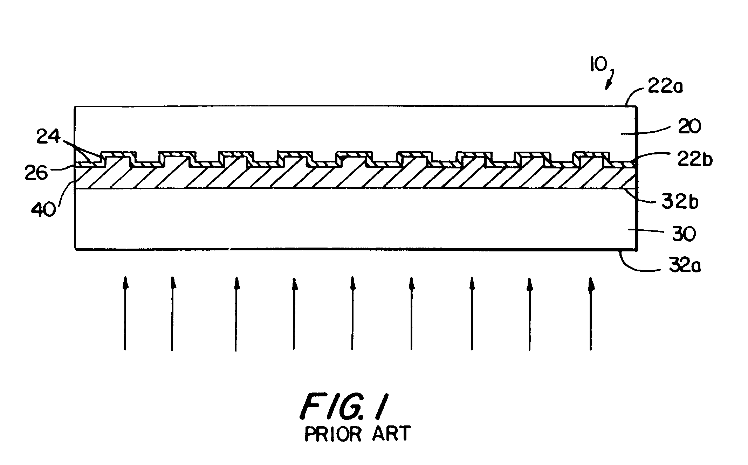

FIG. 1 shows a conventional one-program-information-side DVD 10 comprising a first disc 20 adhesively bonded to a second disc 30. FIG. 1 illustrates the case in which only one of these two discs (first disc 20) is needed for program information recording. Second disc 30 may be used for artwork, labeling, or left blank.

First disc 20 comprises a substantially smooth first surface 22a and a second surface 22b having program information recorded on it by means of local changes 24 in the distance of the second surface 22b from the first surface 22a. A light-reflecting coating 26 is deposited over second surface 22b.

To form conventional one-program-information-side DVD 10, second disc 30 is bonded to first disc 20. Second disc 30 comprises substantially smooth third surface 32a and fourth surface 32b and is bonded to first disc 20 with a light-curable bonding material 40 disposed between second surface 22b and fourth surface 32b. Light-curable bonding material 40 may be placed on either disc or both discs prior to stacking the two discs to form conventional one-program-information-side DVD 10. Light-curable bonding material 40 is then cured by passing light through second disc 30 into light-curable bonding material 40 (the light serving as a catalyst which drives the curing process to completion). Because light-reflecting coating 26 is typically in excess of 60 nanometers, light-curable bonding material 40 cannot be cured by passing light through first disc 20 as light passing through first disc 20 will be entirely reflected away from or absorbed by light-reflecting coating 26 prior to reaching light-curable bonding material 40. Light-curable bonding material 40 must therefore be cured by passing light through non-light-reflecting-coating-containing second disc 30.

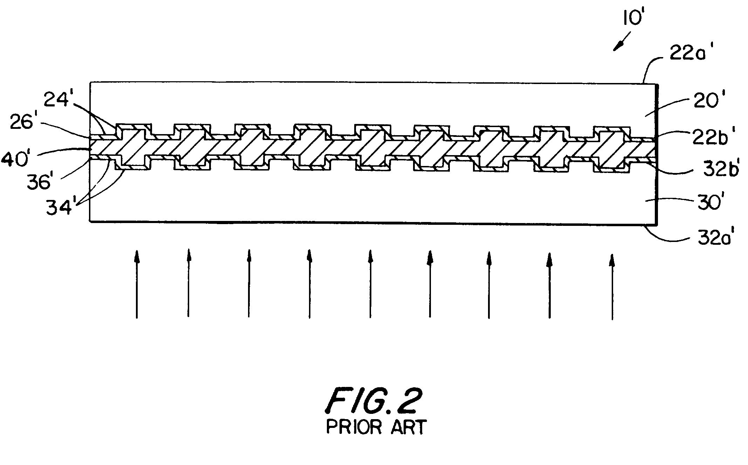

FIG. 2. shows a conventional two-program-information-sides DVD 10' formed by bonding a first disc 20' and a second disc 30' to one another back to back. As with first disc 20 of FIG. 1, first disc 20' of FIG. 2 comprises a substantially smooth first surface 22a' and a second surface 22b' having program information recorded on it by means of local changes 24' in the distance of the second surface 22b' from the first surface 22a'. A light-reflecting coating 26' is deposited over second surface 22b'.

To form conventional two-program-information-sides DVD 10', second disc 30' is bonded to first disc 20', second disc 30' comprising substantially smooth third surface 32a' and fourth surface 32b'. Unlike fourth surface 32b of FIG. 1, fourth surface 32b' of FIG. 2 has program information recorded on it by means of local changes 34' in the distance of fourth surface 32b' from third surface 32a' (as second disc 30' is a program-information bearing disc). Additionally, a light-reflecting coating 36' is deposited over second surface 32b'.

Because of the thicknesses typically used for light-reflecting coatings 26' and 36', a light-curable bonding material may not be employed to bond second disc 30' to first disc 20'. That is, the transmissivities of light-reflecting coatings 26' and 36' are too low to allow sufficient light (e.g., ultra-violet light) to penetrate these coatings for curing a light-curable bonding material 40' disposed between first disc 20' and second disc 30'. As such, an alternative bonding material 40' (e.g., a thermally activated adhesive) must be used during the formation of two-program-information-sides DVD 10'. Similarly, a light-curable bonding material may not be used to bond second disc 30' to first disc 20' if second disc 30' contains artwork which requires a light-reflecting coating 36' (e.g., pit art, enhanced pit art, or holographic artwork).

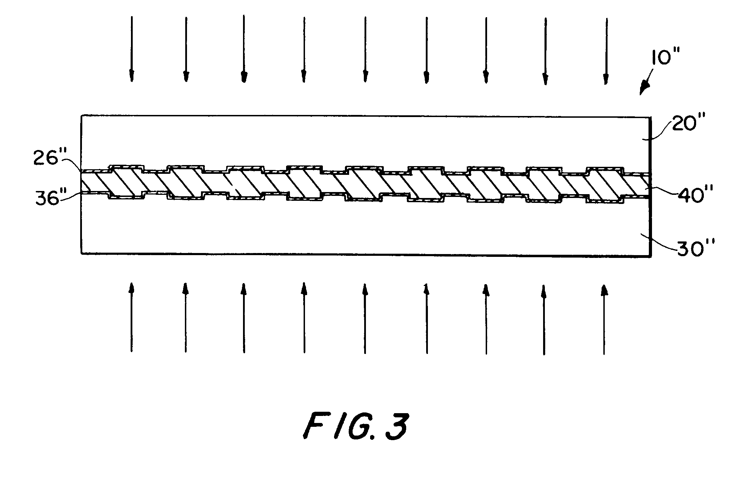

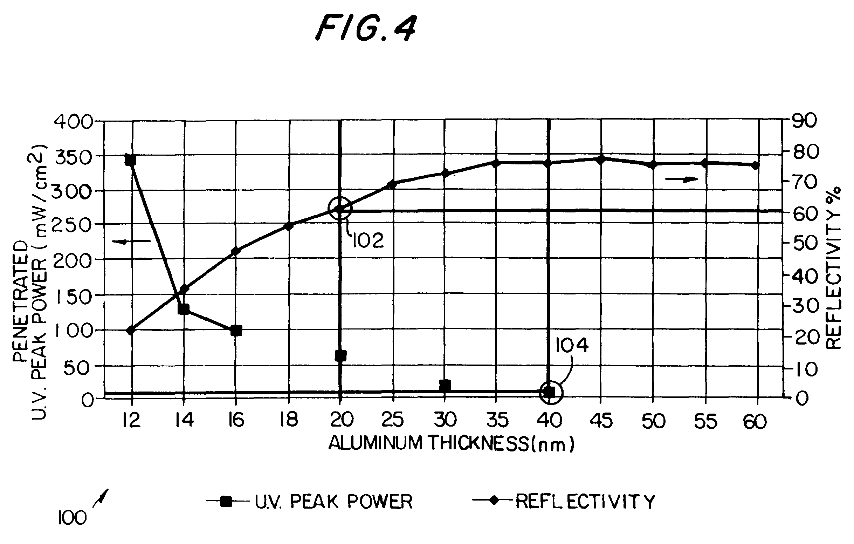

As shown in FIG. 3, an illustrative two-information-sides DVD 10" made in accordance with this invention has a first disc 20'' and a second disc 30'' bonded to one another back to back. First and second discs 20'' and 30'' are identical to first and second discs 20' and 30' of FIG. 2 with the exception of the thicknesses of light-reflecting coatings 26'' and 36''. In the embodiment of FIG. 3, light-reflecting coatings 26'' and 36'' are deposited (e.g., sputtered) with appropriate thicknesses to ensure sufficient reflectivity for playability and sufficient transmissivity for curing a light-curable bonding material by transmitting light through either light-reflecting coating. In this manner, a light-curable bonding material 40'' may be used to secure first disc 20'' to second disc 30''. Preferably, aluminum is used for light-reflecting coatings 26'' and 36'', with each aluminum light-reflecting coating's thickness being in the range of 20 to 40 nanometers. As seen in graph 100 of FIG. 4, within this thickness range an aluminum light-reflecting coating has a reflectivity in excess of 60% at the wavelengths emitted by most disc player lasers. (The reflectivity data of FIG. 4 was measured at 650 nanometers.) Furthermore, an aluminum light-reflecting coating with a thickness in the range of 20 to 40 nanometers has sufficient penetrated ultra-violet energy to ensure adequate curing. That is, if aluminum light-reflecting coatings 26'' and 36'' are within this thickness range, both will possess sufficient transmissivity to allow light-curable bonding material 40'' to be cured by shining ultra-violet light through either aluminum light-reflecting coating 26'' or 36''.

Most preferably, light-reflecting coatings 26'' and 36'' are 20 nanometers in thickness. As seen in graph 100, an 20 nanometer aluminum film still exhibits 60% reflectivity (first graph location 102). Sixty percent reflectivity represents the minimum reflectivity required to ensure playability. As such, an 20 nanometer aluminum film is preferred because playability requirements are satisfied while material costs (e.g., aluminum costs) are minimized. Graph 100 also shows that an aluminum film thickness of 40 nanometers (second graph location 104) results in approximately 5 mW/cm² of penetrated ultra-violet energy. This value is the approximate cut-off value below which light-curable bonding material 40'' may not be sufficiently cured for proper adhesion of first disc 20'' to second disc 30''.

Any other comparable material (e.g., gold, silver, or silicon nitrate) may be employed as light-reflecting material 40'' by selecting the appropriate thickness of the material which ensures sufficient reflectivity for playability and sufficient transmissivity for curing. Additionally, if second disc 30'' contains artwork requiring a light-reflecting coating 36'' (e.g., pit art, enhanced pit art, or holographic artwork), second disc 30'' may similarly be secured to first disc 20'' using a light-curable bonding material in accordance with this invention.

FIG. 3 depicts curing via simultaneous light transmission through both light-reflecting coating 26'' and light-reflecting coating 36''. However, curing may also be achieved by transmitting light through light-reflecting coating 26'' and light-reflecting coating 36'' sequentially (as described in Mueller et al. U.S. patent application No. , filed (attorney docket no. 03546/038) the entire contents of which are hereby incorporated by reference herein) or by transmitting light through only one of the two light-reflecting coatings.

It will be understood that the foregoing is only illustrative of the principles of this invention, and that various modifications can be made by those skilled in the art without departing from the scope and spirit of the invention. For example, the various dimensions and materials mentioned herein are preferred, but other dimensions and materials can be used if desired. Furthermore, graph location 102 may be varied by employing a different intensity laser source for disc playback. If a more powerful laser source is used for disc playback, reflectivities below 60% may be tolerable for light-reflecting coatings 26'' and 36'' (e.g., light-reflecting coatings 26'' and 36'' may be made thinner than 20 nanometers as graph location 102 will be shifted to the left). Similarly, if a less powerful laser source is used for disc playback, reflectivities in excess of 60% may be required for light-reflecting coatings 26'' and 36'', necessitating aluminum coatings with thicknesses exceeding 20 nanometers (e.g., graph location 102 may be shifted to the right). If a more powerful ultra-violet-light source is employed to cure light-curable bonding material 40'', aluminum coating thicknesses in excess of 40 nanometers may be acceptable for light-reflecting coatings 26'' and 36'' (e.g., graph location 104 may be shifted to the right); while if a less powerful ultra-violet-light source is employed, aluminum coating thicknesses below 40 nanometers for light-reflecting coatings 26'' and 36'' will be required to properly cure light-curable bonding material 40'' (e.g., graph location 104 may be shifted to the left).

## Claims

1. An information recording medium comprising:
a first substantially transparent plastic disc having a first substantially planar surface and a second surface opposite to said first surface, said second surface having first information recorded on it by means of local changes in the distance of said second surface from said first surface;
a first light-reflecting coating on said second surface for reflecting first light passed through said first disc back through said first disc, said first coating conforming to said local changes of said second surface so that said first light is reflected back through said first disc in accordance with the first information recorded by means of said local changes, said first coating having a first coating thickness which allows light-curable bonding material curing through said first coating while maintaining sufficient first coating reflectivity for playability;
a second plastic disc of approximately the same thickness as said first disc, said second disc having opposite, substantially planar, third and fourth surfaces, said fourth surface having second information recorded on it by means of local changes in the distance of said fourth surface from said third surface; and
a second light-reflecting coating on said fourth surface for reflecting second light passed through said second disc back through said second disc, said second coating conforming to said local changes of said fourth surface so that said second light is reflected back through said second disc in accordance with the second information recorded by means of said local changes, said second disc being stacked on and secured to said first disc so that said fourth surface faces said second surface.

2. The recording medium defined in claim 1 wherein said second light-reflecting coating has a second coating thickness which allows light-curable bonding material curing through said second coating while maintaining sufficient second coating reflectivity for playability.

3. The recording medium defined in claim 1 wherein said first information comprises program information.

4. The recording medium defined in claim 1 wherein said first information comprises pit art.

5. The recording medium defined in claim 1 wherein said first information comprises enhanced pit art.

6. The recording medium defined in claim 1 wherein said first information comprises holographic artwork.

7. The recording medium defined in claim 1 wherein said second information comprises program information.

8. The recording medium defined in claim 1 wherein said second information comprises pit art.

9. The recording medium defined in claim 1 wherein said second information comprises enhanced pit art.

10. The recording medium defined in claim 1 wherein said second information comprises holographic artwork.

11. The recording medium defined in claim 1 wherein said first light-reflecting coating comprises aluminum.

12. The recording medium defined in claim 11 wherein said first light-reflecting coating thickness is within the range of 20 to 40 nanometers.

13. The recording medium defined in claim 1 wherein said second light-reflecting coating comprises aluminum.

14. The recording medium defined in claim 13 wherein said second light-reflecting coating thickness is within the range of 20 to 40 nanometers.

15. The recording medium defined in claim 1 further comprising a light-curable bonding material for securing said second disc to said first disc.

16. The recording medium defined in claim 15 wherein said light-curable bonding material comprises an ultra-violet-light-curable bonding material.

17. The method of making a recording medium which has respectively different first and second recorded information, said method comprising:
forming a first substantially transparent plastic disc which has a first substantially planar surface and a second surface opposite to said first surface on which said first information is recorded by means of local changes in the distance of said second surface from said first surface;
coating said second surface of said first disc with a first light-reflecting coating which reflects first light passed through said first disc back through said first disc, said first coating conforming to said local changes of said second surface so that said first light is reflected back through said first disc in accordance with the first information recorded by said local changes, said first coating having a first coating thickness which allows light-curable bonding material curing through said first coating while maintaining sufficient first coating reflectivity for playability;
forming a second substantially transparent plastic disc which has a third substantially planar surface and a fourth surface opposite to said third surface on which said second information is recorded by means of local changes in the distance of said fourth surface from said third surface;
coating said fourth surface of said second disc with a second light-reflecting coating which reflects second light passed through said second disc back through said second disc, said second coating conforming to said local changes of said fourth surface so that said second light is reflected back through said second disc in accordance with the second information recorded by said local changes; and
bonding said first disc to said second disc so that the bonded disc forms a permanent two-disc stack with the second surface of said first disc being adjacent to said fourth surface of said second disc.

18. The method defined in claim 17 wherein said coating said fourth surface further comprises:
providing said second light-reflecting coating with a second coating thickness which allows light-curable bonding material curing through said second coating while maintaining sufficient second coating reflectivity for playability.

19. The method defined in claim 17 wherein said first information comprises program information.

20. The method defined in claim 17 wherein said first information comprises pit art.

21. The method defined in claim 17 wherein said first information comprises enhanced pit art.

22. The method defined in claim 17 wherein said first information comprises holographic artwork.

23. The method defined in claim 17 wherein said second information comprises program information.

24. The method defined in claim 17 wherein said second information comprises pit art.

25. The method defined in claim 17 wherein said second information comprises enhanced pit art.

26. The method defined in claim 17 wherein said second information comprises holographic artwork.

27. The method defined in claim 17 wherein said coating said second surface comprises:
coating said second surface with an aluminum light-reflecting coating.

28. The method defined in claim 17 wherein said coating said second surface comprises:
coating said second surface with an aluminum light-reflecting coating with a thickness between 20 and 40 nanometers.

29. The method defined in claim 17 wherein said coating said fourth surface comprises:
coating said fourth surface with an aluminum light-reflecting coating.

30. The method defined in claim 17 wherein said coating said fourth surface comprises:
coating said fourth surface with an aluminum light-reflecting coating with a thickness between 20 and 40 nanometers.

31. The method defined in claim 17 wherein said bonding comprises:
covering at least one of said second and fourth surfaces with a light-curable bonding material;
placing said second surface adjacent said fourth surface to form a two-disc stack; and
curing said light-curable bonding material by exposing said light-curable bonding material to light.

32. The method defined in claim 17 wherein said bonding comprises:
covering at least one of said second and fourth surfaces with an ultra-violet-light-curable bonding material;
placing said second surface adjacent said fourth surface to form a two-disc stack; and
curing said ultra-violet-light-curable bonding material by exposing said ultra-violet-light-curable bonding material to ultra-violet light.

33. The method defined in claim 31 wherein said curing comprises:
shining light through both said first light-reflecting coating and said second light-reflecting coating.

34. The method defined in claim 33 wherein said curing comprises:
shining light through said first light-reflecting coating and said second light-reflecting coating simultaneously.

35. The method defined in claim 33 wherein said curing comprises:
shining light through said first light-reflecting coating and said second light-reflecting coating sequentially.

36. The method defined in claim 31 wherein said curing comprises:
shining light through only one of said first and second light-reflecting coatings.
